Europäisches Patentamt

European Patent Office

Office européen des brevets

(19)

(11) **EP 1 136 174 B1**

(12) **EUROPÄISCHE PATENTSCHRIFT**

(45) Veröffentlichungstag und Bekanntmachung des Hinweises auf die Patenterteilung:
**17.08.2005 Patentblatt 2005/33**

(51) Int Cl.7: **B23Q 11/00**, A47L 9/28, B08B 15/04

(21) Anmeldenummer: **01106039.9**

(22) Anmeldetag: **12.03.2001**

(54) **Gerätesatz zur Bearbeitung von Oberflächen**

Equipment for working surfaces

Dispositif de traitement de surfaces

(84) Benannte Vertragsstaaten:
**AT BE CH CY DE DK ES FI FR GB GR IE IT LI LU MC NL PT SE TR**

(30) Priorität: **13.03.2000 DE 10012182**

(43) Veröffentlichungstag der Anmeldung:
**26.09.2001 Patentblatt 2001/39**

(73) Patentinhaber: **Schaffer, Karl**
**82319 Starnberg (DE)**

(72) Erfinder: **Schaffer, Karl**
**82319 Starnberg (DE)**

(74) Vertreter: **TBK-Patent**
**Bavariaring 4-6**
**80336 München (DE)**

(56) Entgegenhaltungen:
| | |
|---|---|
| **EP-A- 0 022 435** | **EP-A- 0 377 100** |
| **DE-A- 1 777 147** | **DE-A- 3 000 390** |
| **DE-A- 3 219 391** | **DE-A- 4 238 564** |
| **DE-A- 19 822 223** | **GB-A- 100 817** |
| **GB-A- 1 259 898** | **US-A- 3 608 968** |
| **US-A- 4 923 251** | |

- **PATENT ABSTRACTS OF JAPAN vol. 012, no. 160 (M-697), 14. Mai 1988 (1988-05-14) -& JP 62 277253 A (SATO KOGYO KK), 2. Dezember 1987 (1987-12-02)**

**Beschreibung**

Die Erfindung bezieht sich auf einen Gerätesatz zur Bearbeitung von Oberflächen, insbesondere auf einen Gerätesatz zur Bearbeitung von kontaminierten Bodenflächen in der Bauwirtschaft.

Geräte zur materialabtragenden Bearbeitung von Oberflächen sind verschiedentlich bekannt. Insbesondere werden Geräte und Vorrichtungen zum schichtweisen Abtragen von Bodenbelägen in der Bauwirtschaft breit eingesetzt.

Aus der Druckschrift DE 198 22 223 A1 ist eine Betonfräse zum Fräsen von, insbesondere beschichteten Beton- oder Estrichböden bekannt. Eine derartige Betonfräse hat einen in einem Fräskopfschacht angeordneten Fräskopf und eine Staubabsaugvorrichtung für die beim Fräsvorgang entstehenden Stäube und Fräsgut. Zur Abschottung des Fräskopfschachts von der Außenluft sind am Gehäuse der Betonfräse angebrachte Dichtlippen und Bürsten vorgesehen.

Aus der Druckschrift DE 42 38 564 ist ein Gerätesatz zur Bearbeitung von Oberflächen mit einer materialabtragenden Vorrichtung, nämlich einer rotierenden Schleifscheibe, bekannt. An der Absaughaube ist mittels eines Abluftrohres eine Unterdruckeinheit zum Absaugen angeschlossen. In das so ausgebildete Unterdrucksystem mündet über einen Verteiler ein Kühlluftrohr ein, welches über ein Gehäuse des antreibenden Elektromotors über Ansaugöffnungen mit der Aussenluft verbunden ist. Somit entsteht ein zweites, an sich offenes Unterdrucksystem. In diesem zweiten offenen Unterdrucksystem ist ein Sensorelement vorgesehen, welches mit einer Einschaltautomatik verbunden ist.

Aus der weiteren Druckschrift DE 43 23 222 A1 ist ein Verfahren und eine Einrichtung zur Füllgradanzeige des Staubfilterbeutels in einem Staubsauger bekannt. Hierbei handelt es sich im einzelnen um eine Filterwechselanzeige mit einem Komperator für den Differenzdruckvergleich, wobei der Komperator mit einer nachgeschalteten Staubfilterbeutel-Füllgradanzeige verbunden ist. Eine derartige Anzeige ist dazu geeignet, anzuzeigen, wenn im Saugbetrieb durch aufgenommenen Feinstaub die Poren des Staubfilterbeutels zunehmend verstopft werden. Werden luftige Materialien eingesaugt, so findet ein geringerer Druckabfall im Inneren des Staubfilterbeutels statt. Dadurch ist es möglich, mit einfachen Mitteln einerseits eine bessere Staubfilterausnutzung bei der Aufnahme von Feinstaub ohne Filterverstopfung zu erreichen, und andererseits beim Saugen von luftigem Material eine Überfüllung des Filterbeutels zu vermeiden.
Die Problematik der Verwendung eines Filterbeutels lässt sich jedoch auf die Eingangs beschriebene Betonfräse nicht übertragen.

Beim Einsatz von Gerätesystemen, die zur Sanierung kontaminierter Bodenflächen verwendet werden, müssen eine staubdichte Abschottung des Sanierungsbereiches sowie eine Raumluftfilterung und Unterdruckhaltung während des Ausbaus der kontaminierten Schichten gemäss der geltenden Normen (TRGS 519) gewährleistet werden. Das ausgebaute, kontaminierte Material muss über Materialschleusen in mehreren Stufen entfernt werden, bevor es den Transportcontainern zugeführt werden kann. Das mit den Arbeiten im kontaminierten Bereich betraute Personal muss im kontaminierten Bereich unter Personenvollschutz mit gebläseunterstützten Masken arbeiten und beim verlassen des Einsatzbereiches über Personalschleusen ein- und ausgeschleust werden. Im Schleusensystem fallen kontaminierte Abwässer an, die über ein Filtersystem dekontaminiert werden müssen. Nicht zuletzt ist zur Durchführung des Verfahrens ein erheblicher Energieaufwand für die Unterdruckhaltung des zu dekontaminierenden Einsatzbereiches und für das Wassermanagement notwendig.

Für das schichtweise Abtragen gemäß dem oben beschriebenen Verfahren wird üblicherweise eine manuell verfahrbare Bodenfräse eingesetzt. Unabhängig und zusätzlich zu der Bodenfräse als Arbeitsgerät sind Material- und Personalschleusen vorgesehen. Ausgehend von diesem Stand der gerätetechnischen Ausrüstung und des bekannten Verfahrens zur Bearbeitung von kontaminierten Bodenflächen werden die oben genannten aufwendige Unterdruckhaltung, zu gewährleistende Abschottungsmaßnahmen und die Notwendigkeit zusätzlicher Ausrüstung für den Personenvollschutz als nachteilig empfunden.

Aufgabe der Erfindung ist es einen Gerätesatz zur Bearbeitung von Oberflächen, insbesondere einen Gerätesatz zur Bearbeitung von kontaminierten Bodenflächen zur Verfügung zu stellen, der ohne komplizierte und aufwendige technische Maßnahmen die erforderliche Sicherheit gewährleistet.

Diese Aufgabe wird durch ein Gerätesystem gemäß der im Anspruch 1 definierten Merkmalskombination gelöst. Vorteilhafte Weiterbildungen der Erfindung sind in den Unteransprüchen definiert.

Die Erfindung wird im folgenden anhand eines Ausführungsbeispiels näher erläutert.

Es zeigen:

Fig. 1: eine Seitenansicht der im erfindungsgemäßen Gerätesatz verwendeten Bodenfräse;

Fig. 2: einen mit der Bodenfräse verbundenen Vorabscheider; und

Fig. 3: einen Unterdruckaggregat zur Erzeugung des notwendigen Unterdrucks in der Bodenfräse und im Vorabscheider.

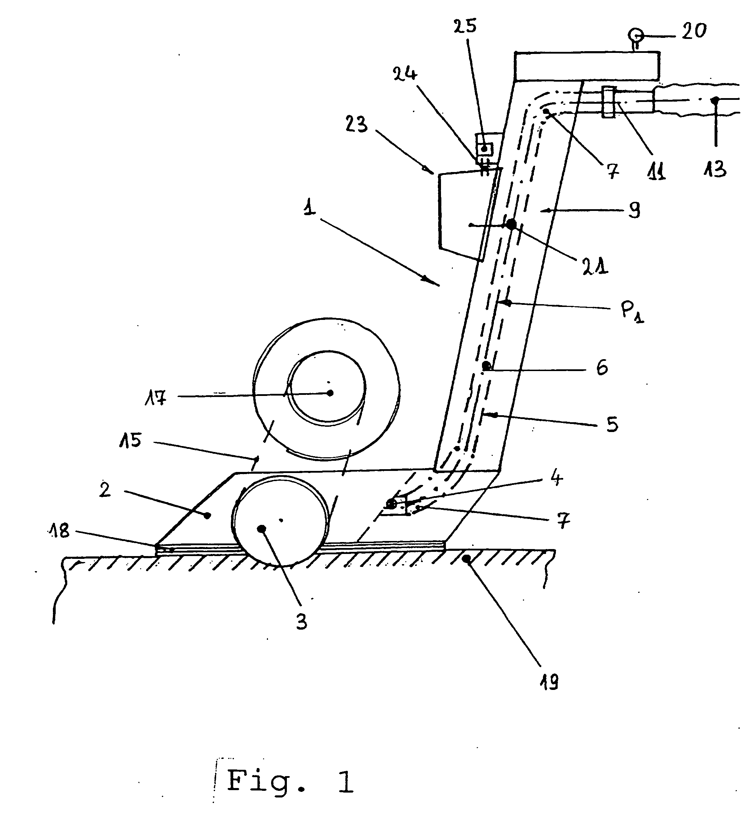

Im Ausführungsbeispiel der Erfindung umfaßt der Gerätesatz eine materialabtragende Vorrichtung, die gemäß der Darstellung in Fig. 1 als Bodenfräse 1 ausgeführt ist. Als eine solche Bodenfräse wird hier eine Estrich-Fräsmaschine eingesetzt. Die Bodenfräse hat einen relativ flachen Bodenabschnitt 2, der ein Gehäuse zur Aufnahme eines nicht im einzelnen gezeigten breiten Walzenfräsers 3 bildet. Am Gehäuse ist ein Ansaugstutzen 4 gasdicht angebracht, der mit einer Saugleitung 5 verbunden ist. Die Saugleitung besteht aus einem Kunststoffrohr 6, an dessen beiden Enden zwei Knieverbindungsstücke 7 aus Metall angebracht sind, und erstreckt sich im Inneren eines Säulenabschnitts 9 der Bodenfräse. Die Saugleitung 5 ist an einem Ende mit dem Ansaugstutzen 4 und an anderem Ende mit einem Schlauchverbindungsstutzen 11 verbunden, an dem ein Saugschlauch 13 mit einem Innendurchmesser von 50 mm und einer Länge bis zu 100 m angebracht ist.

Der im Bodenabschnitt 2 untergebrachte Walzenfräser 3 ist über einen Keilriemen 15 mit einem auf dem Bodenabschnitt 2 abgestützten Antriebsmotor 17 verbunden. An der nach unten gerichteten Oberfläche des Bodenabschnitts 2 ist eine umlaufende Lippendichtung 18 angebracht, die im aufgesetzten Zustand der Bodenfräse auf der Bodenoberfläche 19 den Innenraum des Gehäuses mit dem darin aufgenommenen Walzenfräser 3 nach außen hin luftdicht abschließt. Der Antriebsmotor kann mit einem im oberen Abschnitt der Bodenfräse befindlichen Handschalter 20 ein- und ausgeschaltet werden.

In der Saugleitung 5 ist ein Messfühler 21 eingebaut, der nach außen hin mit einem Differenzdruckschalter 23 verbunden ist. Am Differenzdruckschalter 23 befinden sich ein Strom-DifferenzDruck-Anschluss 24 sowie ein 230/380 Volt-Anschluss 25.

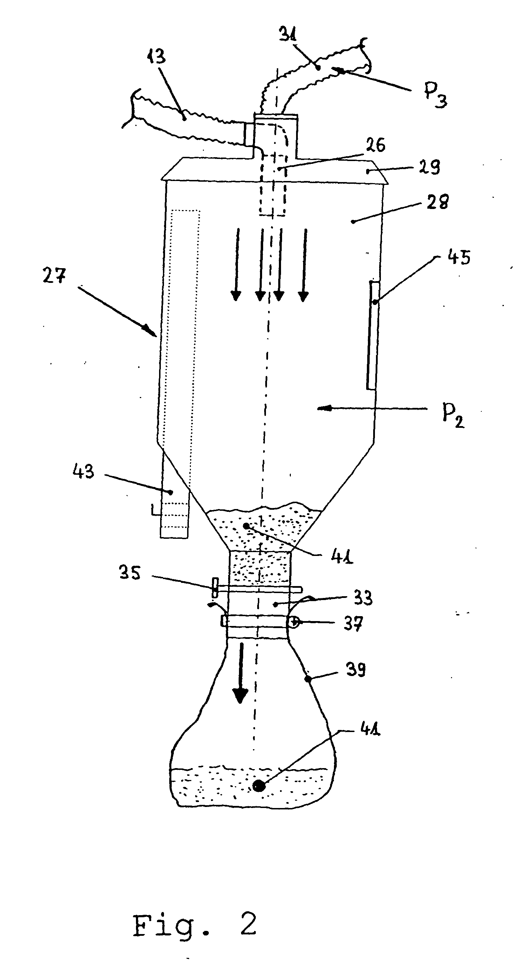

In diesem Ausführungsbeispiel sind die Schneidkanten des breiten Walzenfräsers 3 mit Diamant beschichtet, so daß mit diesem Walzenfräser sehr dünne Schichten von der Bodenoberfläche abgetragen werden können. Der Saugschlauch 13 besteht aus einem stahlarmierten Kunststoff und führt zu dem in Fig. 2 gezeigten Vorabscheider 27, der sich in der Regel in einem anderen Raum als die in Fig. 1 gezeigte Bodenfräse befindet.

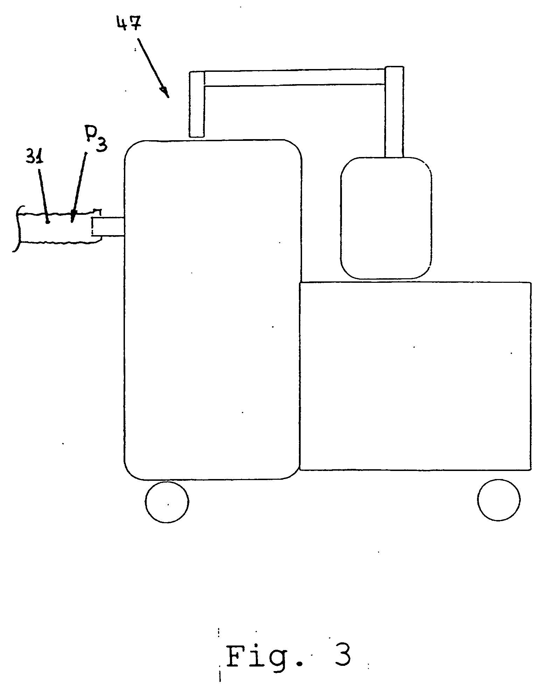

Der Vorabscheider 27 betsteht im wesentlichen aus einem Behälter 28, der an seinem oberen Ende mit einem Deckel 29 versehen ist. Der Deckel 29 hat einen Anschlussstutzen 26, an dem der zu der Bodenfräse 1 führende Saugschlauch 13 angebracht ist. Am unteren konisch zulaufenden Ende des Behälters 28 ist ein Entsorgungsrohr 33 versehen, welches mit einem Schwertschieber 35 sowie einer Sackklemme 37 ausgestattet ist. Die Sackklemme dient zur Anbringung eines Entsorgungsbehälters 39 in Form eines flexiblen Sacks, in dem das Fräsgut 41 aufgenommen werden kann. Das Innere des Behälters 27 ist mit der Außenluft durch eine Fehlluftklappe 43 verbunden. Auf der Seitenwand des Behälters 27 ist außerdem ein Schauglas 45 eingebaut, das die Funktion einer Füllstand-Anzeigevorrichtung erfüllt. Der Behälter 28 des Vorabscheiders 27 ist schließlich durch einen weiteren Saugschlauch 31 mit einem Innendurchmesser von 70 mm und einer Länge bis zu 50 m mit der in Fig. 3 gezeigten Unterdruckeinheit 47 verbunden.

Als Unterdruckeinheit 47 dient ein handelsübliches Unterdruckaggregat mit einer Mindestleistung von 9,5 KW und mit einem Filtersystem zum Abscheiden von kanzerogenen Stäuben. Das Filtersystem besteht aus einem Vorfilter, einem Grobfilter und einem Feinstfilter.

Die Funktionsweise des aus den obengenannten Einheiten bestehenden und ein geschlossenes Unterdrucksystem bildenden Gerätesatzes zur Bearbeitung von Bodenflächen wird nachfolgend erläutert.

Zunächst wird die Unterdruckeinheit 47 eingeschaltet, damit der zum Absaugen des in der Bodenfräse 1 abgetragenen Materials notwendige Unterdruck erzeugt wird. Dabei wird durch die Verbindung der Unterdruckeinheit 47 mit der Bodenfräse 1 mittels der Schläuche 31 und 13 unter Zwischenschaltung des Vorabscheiders ein Druck $P_1$ in der Saugleitung 5 und somit auch im Gehäuse des Bodenabschnitts 1 hergestellt. Entsprechend der besonderen Anordnung des Gerätesatzes wird in dem Behälter 28 des Vorabscheiders 27 ein niedrigerer Druck (stärkerer Unterdruck) $P_2$ hergestellt, der wiederum höher als der Druck $P_3$ in dem Saugschlauch 31 ist, der zu der Unterdruckeinheit 45 führt. Auf diese Weise ist die Ungleichung

$$P_1 > P_2 > P_3$$

erfüllt. Durch die umlaufende, hoch abriebfeste, 5 mm starke Lippendichtung 19 aus Kunststoff werden die Druckverluste an der Bodenfräse 1 erheblich reduziert.

Durch anschließendes Betätigen des Handschalters 20 wird der Motor 17 eingeschaltet und der Walzenfräser 3 mittels des Keilriemens 15 angetrieben. Die dadurch erzielte Rotation des Walzenfräsers bewirkt kombiniert mit einer gleitenden Bewegung des Bodenabschnitts 2 ein schichtweises Abtragen von Material von der Bodenoberfläche 19 führt. Durch Regulierung der Höhe des Walzenfräsers 3 im Bodenabschnitt 1 kann die Dicke der abgetragenen Bodenschicht eingestellt werden. Das Oberflächenmaterial, wie beispielsweise ein schadstoffhaltiger Baustoff, in dem Asbest, PCB, oder PAK als Zuschlagstoffe zur Erhöhung der Abriebsfestigkeit enthalten sind, wird mittels der diamantbeschichteten Fräslamellen vom Boden abgeschält und in Drehrichtung der Lamellen zum Bediener hin unter Einwirkung des Unterdrucks $P_1$ abgesaugt. Dabei wird durch die Kombination der Knieverbindungen 9 aus Stahl mit der aus Kunststoff gefertigten Saugleitung 5 eine Weiterleitung des Fräsguts zum Vorabscheider durch die Saugleitung 13 unter geminderten Verschleiß und geringere Vibrationen gewährleistet.

Durch den Messfühler 21 der Differentialdruckmessvorrichtung 23 ist es möglich, einen unerwünschten Druckanstieg festzustellen und die sofortige automatische Abschaltung der Bodenfräse 1 herbeizuführen, ohne dafür den Handschalter 20 betätigen zu müssen. Die Empfindlichkeit, bei der der Differenzdruckschalter 23 anspricht liegt bei einer Druckdifferenz von 10 mbar, wobei diese Druckdifferenz einstellbar ist. Bei Bedarf kann die Druckdifferenz insbesondere in Abhängigkeit von der Leistung der Unterdruckeinheit 45 und der Beschaffenheit der Unterdruckschläuche 13, 31 und des Vorabscheiders 27 eingestellt werden. Durch eine derartige automatische Abschaltung bei Ausfall oder Leckage kann eine Kontamination des Umfeldes wirksam ausgeschlossen werden.

Das Fräsgut 41 gelangt anschließend über den Saugschlauch 13 in den in Fig. 2 gezeigten Vorabscheider 27 und setzt sich im Bodenabschnitt des Behälters 28 ab. Durch Betätigung des Schwertschiebers 35 kann das Fräsgut 41 dosiert in den darunter befindlichen, mittels der Sackklemme 37 am Endabschnitt des Behälters 27 befestigten Sack 39 abgefüllt werden. Die Entnahme des abgefüllten Sacks 39 unterhalb des Vorabscheiders 27 erfolgt bei laufender Unterdruckeinheit 47, wodurch ein Nachrieseln von Fräsgut oder ein Austritt von kontaminiertem Feinstaub aus dem Behälter 28 ausgeschlossen ist.

Das Niveau des Fräsgutes 41 kann dabei durch die Füllstandanzeigeeinrichtung 45, die hier als Schauglas ausgeführt ist, überwacht werden.

Am Vorabscheider 27 kann bei Bedarf die Fehlluftklappe 43 betätigt werden, um die automatische Abschaltung der Bodenfräse 1 zu bewirken, wenn festgestellt wird, dass eine Unregelmäßigkeit in der Funktion des Vorabscheiders, wie zum Beispiel eine Überfüllung des Behälters 28, eingetreten ist.

Im vorliegenden Ausführungsbeispiel ist der Vorabscheider 27 auf einem nicht im einzelnen gezeigten, fahrbaren Ständer installiert.

Wie anhand des oben beschriebenen Ausführungsbeispiels zu erkennen ist können durch die Anwendung des erfindungsgemäßen Gerätesatzes Abschottungsmaßnahmen, die aufwendige Unterdruckhaltung von Räumen sowie die Verwendung von Schleusen und eines Wassermanagementsystems wegfallen. Außerdem ist es möglich durch die Verwendung des diamantbeschichteten . Walzenfräsers dünne Schichten bis zum Erreichen des unkontaminierten Baustoffs abzutragen, woraus eine Verringerung der Abfallmengen resultiert. Ein wesentlicher Vorteil besteht auch im Wegfall von Zulagen für Arbeiten unter Vollschutz, in der Reduzierung von vorbereitenden Maßnahmen, der Verkürzung von Zeiten für Baustelleinrichtung und -abbau sowie in der Verringerung des Personalaufwandes.

Zusätzlich zu den wirtschaftlichen Vorteilen hat das erfindungsgemäße Gerätesystem auch wesentliche ökologische Vorteile. Diese bestehen unter anderem in der Reduzierung der Mengen an kontaminiertem Abfall, zu dem nicht nur die ausgebauten kontaminierten Baumaterialien, sondern auch das gesamte kontaminierte Abschottungsmaterial, Schutzausrüstung, Schleusenbaumaterial, Abluftfilter, etc. zählen. Auch die Entstehung von kontaminierten Abwässern wird durch die Anwendung des erfindungsgemäßen Gerätesatzes vermieden.

Die Erfindung ist auf die Ausführung des oben beschriebenen Gerätesystems nicht beschränkt. So zum Beispiel kann die Bodenfräse zur Bearbeitung von Randbereichen eines zu sanierenden Raumes mit einer zusätzlichen Randfräse ausgestattet werden, die ebenfalls an der Saugleitung 5 angeschlossen ist. Es ist auch möglich, mehrere Fräsaggregate, zum Beispiel verschiedenartige Fräsen als selbstständige Einheiten zum Abtragen von Oberflächenmaterial, an den in Fig. 2 gezeigten Vorabscheider 27 anzuschließen. Bei einer derartigen Ausführung muss jedoch die Leistung der Unterdruckeinheit entsprechend erhöht werden, ohne dadurch das Funktionsprinzip des vorliegenden geschlossenen Unterdrucksystems zu verändern.

Eine weitere Ausführungsform der erfindungsgemäßen Gerätesystems besteht darin, nicht nur an der materialabtragenden Vorrichtung, d.h. an der Bodenfräse 1, sondern auch an den in Fig. 2 gezeigten Vorabscheider 27 einen Differenzdruckschalter mit einem entsprechenden, im Inneren des Behälters 27 angebrachten Messfühler vorzusehen. Beim Ausfall Ein Gerätesatz zur Bearbeitung von Oberflächen hat eine materialabtragende Vorrichtung (1) und eine daran angeschlossene, mit dieser zusammen ein geschlossenes Unterdrucksystem bildende Unterdruckeinheit (47) zum Absaugen von abgetragenem Oberflächenmaterial. Die materialabtragende Vorrichtung (1) hat einen Differenzdruckschalter (23) zum selbsttätigen Abschalten der Vorrichtung beim Unterschreiten einer bestimmten Druckdifferenz zwischen dem Unterdrucksystem und Außenluft.

## Patentansprüche

1. Gerätesatz zur Bearbeitung von Oberflächen mit einer materialabtragenden Vorrichtung (1) und einer daran angeschlossenen, mit dieser zusammen ein geschlossenes Unterdrucksystem bildenden Unterdruckeinheit (47) zum Absaugen von abgetragenem Oberflächenmaterial, **dadurch gekennzeichnet, daß** die Vorrichtung (1) einen Differenzdruckschalter (23) zum selbsttätigen Abschalten der Vorrichtung beim Unterschreiten einer bestimmten Druckdifferenz zwischen dem Unterdrucksystem und Außenluft aufweist.

2. Gerätesatz nach Anspruch 1, **dadurch gekennzeichnet, daß** das geschlossene Unterdrucksystem einen zwischen der materialabtragenden Vorrichtung (1) und der Unterdruckeinheit (47) geschalteten Vorabscheider (27) aufweist, in dem das abgetragene Material (41) gesammelt und von dem Unterdrucksystem entfernt werden kann.

3. Gerätesatz nach Anspruch 2, **dadurch gekennzeichnet, daß** das im Vorabscheider (27) gesammelte Material (41) während des Betriebs der Unterdruckeinheit (47) von dem Unterdrucksystem entfernbar ist.

4. Gerätesatz nach Anspruch 2 oder 3, **dadurch gekennzeichnet, daß** weitere materialabtragende Vorrichtungen (1) am Vorabscheider (27) geschaltet sind.

5. Gerätesatz nach einem der Ansprüche 1 bis 4, **dadurch gekennzeichnet, daß** die materialabtragende Vorrichtung (1) als verfahrbare Bodenfräse ausgebildet ist, dessen Bodenabschnitt (2) mit einem vertikal einstellbaren Walzenfräser (3) und einer umlaufenden Lippendichtung (18) ausgestattet ist. '

6. Gerätesatz nach Anspruch 5, **dadurch gekennzeichnet, daß** der Walzenfräser (3) diamantbeschichtete Schneidkanten aufweist, um die kontrollierte Abtragung dünner Oberflächenschichten zu gewährleisten.

7. Gerätesatz nach einem der Ansprüche 2 bis 6, **dadurch gekennzeichnet, daß** der Vorabscheider (27) eine Fehlluftklappe (43) zum kontrollierten selbsttätigen Abschalten der materialabtragenden Vorrichtung (1) aufweist.

8. Gerätesatz nach einem der Ansprüche 2 bis 7, **dadurch gekennzeichnet, daß** der Vorabscheider (27) verfahrbar ausgebildet und mittels armierter Kunststoffschläuche (13, 31) mit der ebenfalls verfahrbaren Unterdruckeinheit (47) sowie der materialabtragenden Vorrichtung (1) verbunden ist.

9. Gerätesatz nach einem der Ansprüche 1 bis 8, **dadurch gekennzeichnet, daß** die materialabtragende Vorrichtung (1) in ihrem Inneren eine Saugleitung (5, 9) aufweist, die aus an ihren Krümmungen vorgesehenen Knieverbindungen (9) aus Metall und im übrigen aus Kunststoff besteht.

10. Gerätesatz nach einem der Ansprüche 1 bis 9, **dadurch gekennzeichnet, daß** die Druckdifferenz, bei der der Differenzdruckschalter (23) anspricht, einstellbar ist.

11. Gerätesatz nach einem der Ansprüche 1 bis 9, **dadurch gekennzeichnet, daß** der Differenzdruckschalter (23) so eingestellt ist, daß er bei einer Druckdifferenz zur Außenluft von 10 mbar anspricht.

12. Verwendung des Gerätesatzes nach einem der Ansprüche 1 bis 11 zur materialabtragenden Bearbeitung von kontaminierten Bodenflächen.

**Claims**

1. A set of equipment for working surfaces, having a material-removing device (1) and a vacuum unit (47) attached thereto and forming together therewith a closed vacuum system, for aspirating surface material which has been removed, **characterised in that** the device (1) comprises a differential pressure switch (23) for automatic switching-off of the device if the pressure differential between the vacuum system and the outside air falls below a given value.

2. A set of equipment according to claim 1, **characterised in that** the closed vacuum system comprises a pre-separator (27) connected between the material-removing device (1) and the vacuum unit (47), in which pre-separator (27) the removed material (41) may be collected and taken away from the vacuum system.

3. A set of equipment according to claim 2, **characterised in that** the material (41) collected in the pre-separator (27) may be taken away from the vacuum system during operation of the vacuum unit (47).

4. A set of equipment according to claim 2 or claim 3, **characterised in that** further material-removing devices (1) are connected to the pre-separator (27).

5. A set of equipment according to any one of claims 1 to 4, **characterised in that** the material-removing device (1) takes the form of a mobile rotary cultivator, the ground portion (2) of which is provided with a vertically adjustable cylindrical cutter (3) and a circumferential lip seal (18).

6. A set of equipment according to claim 5, **characterised in that** the cylindrical cutter (3) comprises diamond-coated cutting edges, in order to ensure controlled removal of thin surface layers.

7. A set of equipment according to any one of claims 2 to 6, **characterised in that** the pre-separator (27) comprises a malfunction air valve (43) for controlled automatic switching-off of the material-removing device (1).

8. A set of equipment according to any one of claims 2 to 7, **characterised in that** the pre-separator (27) is of mobile construction and is connected to the likewise mobile vacuum unit (47) and the material-removing device (1) by means of reinforced plastics hoses (13, 31).

9. A set of equipment according to any one of claims 1 to 8, **characterised in that** the material-removing device (1) comprises a suction pipe (5, 9) inside it, which consists of metal at the elbow joints (9) provided at its bends and otherwise of plastics.

**10.** A set of equipment according to any one of claims 1 to 9, **characterised in that** the pressure differential at which the differential pressure switch (23) responds is adjustable.

**11.** A set of equipment according to any one of claims 1 to 9, **characterised in that** the differential pressure switch (23) is so adjusted that it responds at a pressure differential relative to the outside air of 10 mbar.

**12.** Use of the set of equipment according to any one of claims 1 to 11 for material-removing working of contaminated ground surfaces.


**Revendications**

**1.** Équipement destiné au traitement de surfaces, comportant un dispositif d'enlèvement de matière (1) et une unité de dépression (47), qui est raccordée à ce dernier et forme conjointement avec celui-ci un système de dépression fermé, et qui est destinée à aspirer la matière enlevée en surface, **caractérisé en ce que** le dispositif (1) comporte un commutateur à différence de pression (23) destiné à déconnecter automatiquement le dispositif en cas de franchissement en dessous d'une différence de pression déterminée entre le système de dépression et l'air ambiant.

**2.** Équipement selon la revendication 1, **caractérisé en ce que** le système de dépression fermé comporte un séparateur préliminaire (27), qui est monté entre le dispositif d'enlèvement de matière (1) et l'unité de dépression (47) et dans lequel la matière enlevée (41) est collectée et peut être évacuée par le système de dépression.

**3.** Équipement selon la revendication 2, **caractérisé en ce que** la matière (41) collectée dans le séparateur préliminaire (27) peut être évacuée par le système de dépression en cours de service de l'unité de dépression (47).

**4.** Équipement selon la revendication 2 ou 3, **caractérisé en ce que** d'autres dispositifs d'enlèvement de matière (1) sont raccordés au séparateur préliminaire (27).

**5.** Équipement selon l'une quelconque des revendications 1 à 4, **caractérisé en ce que** le dispositif d'enlèvement de matière (1) est conçu sous forme de fraiseuse de sol mobile, dont la partie au sol (2) est équipée d'une fraise à surfacer (3) réglable verticalement et d'un joint à lèvres (18) périphérique.

**6.** Équipement selon la revendication 5, **caractérisé en ce que** la fraise à surfacer (3) comporte des arêtes de coupe revêtues d'une couche diamantée, afin de garantir un enlèvement contrôlé de minces couches superficielles.

**7.** Équipement selon l'une quelconque des revendications 2 à 6, **caractérisé en ce que** le séparateur préliminaire (27) comporte un volet d'air manquant (43) afin de contrôler la déconnexion automatique du dispositif d'enlèvement de matière (1).

**8.** Équipement selon l'une quelconque des revendications 2 à 7, **caractérisé en ce que** le séparateur préliminaire (27) est mobile et est relié, par l'intermédiaire de tuyaux flexibles (13, 31) en matière plastique armée, à l'unité de dépression (47) également mobile, ainsi qu'au dispositif d'enlèvement de matière (1).

**9.** Équipement selon l'une quelconque des revendications 1 à 8, **caractérisé en ce que** le dispositif d'enlèvement de matière (1) comporte à l'intérieur une conduite d'aspiration (5, 9), qui est réalisée avec des raccords coudés en métal prévus au niveau de ses courbures et est réalisée en matière plastique pour le reste.

**10.** Équipement selon l'une quelconque des revendications 1 à 9, **caractérisé en ce qu'**il est possible de régler la différence de pression à laquelle réagit le commutateur à différence de pression (23).

**11.** Équipement selon l'une quelconque des revendications 1 à 9, **caractérisé en ce que** le commutateur de différence de pression (23) est réglé de telle sorte qu'il réagit lorsque à différence de pression par rapport à l'air ambiant est égale à 10 mbar.

**12.** Utilisation de l'équipement selon l'une quelconque des revendications 1 à 11, destiné au traitement par enlèvement de matière des surfaces de sol contaminées.

Fig. 1

Fig. 2

Fig. 3